# EUROPEAN PATENT APPLICATION

(11) **EP 2 667 478 A1**
(43) Date of publication of application: **27.11.2013**
(21) Application number: 12736452.9
(22) Date of filing: 19.01.2012
(51) Int. Cl.: H02J 7/00

(54) **ELECTRIC-VEHICLE CHARGING DEVICE, ELECTRIC-VEHICLE CHARGING METHOD, PROGRAM, AND RECORDING MEDIUM**

(30) Priority: 19.01.2011 JP 2011009180
(71) Applicant: Sharp Kabushiki Kaisha, Osaka-shi, Osaka 545-8522 (JP)
(72) Inventor: SATOH, Katsuhiko, Osaka 545-8522 (JP)
(74) Representative: Müller - Hoffmann & Partner
(86) International application number: PCT/JP2012/051121
(87) International publication number: WO 2012/099217

(57) **Abstract**

A control apparatus (14) of an electric vehicle charging apparatus (1) applies control such that, when not charging a motive power storage battery (41), a storage battery (13) for supplying charging power is charged with electric power supplied from an alternating current power source (17) input via an AC-DC conversion apparatus (11) and a bidirectional DC-DC conversion apparatus (12), and when charging the motive power storage battery (41), the motive power storage battery (41) is charged with electric power from the alternating current power source (17) output via the AC-DC conversion apparatus (11) as well as electric power discharged from the storage battery (13) for supplying charging power and output via the bidirectional DC-DC conversion apparatus (12).

## Description

### Technical Field

The present invention relates to an electric vehicle charging apparatus that charges a storage battery in an electric vehicle, an electric vehicle charging method, a program, and a recording medium.

### Background Art

In recent years, electric vehicles that use a motor instead of an internal combustion engine as a motive power source are being developed. An electric vehicle uses a storage battery as a power source, and travels by driving a motor with a power supply from the storage battery. For this reason, there are many advantages compared to internal combustion engines, such as cheap energy expenses, high energy efficiency, extremely low noise, and no discharge of exhaust gas during travel.

A storage battery of an electric vehicle may be charged in a typical home, for example, by using an electric utility such as 100 V or 200 V, for example, supplied from a power company. In this case, alternating current voltage from an ordinary electric utility is directly supplied to the electric vehicle and converted into direct current voltage by an AC-DC converter mounted onboard the electric vehicle. The direct current voltage is supplied to and charges the storage battery of the electric vehicle.

Meanwhile, since a storage battery of an electric vehicle supplies electric power to a motor that drives the electric vehicle, the storage battery is a large-capacity battery. For this reason, charging a storage battery of an electric vehicle with electric power from an electric utility supplied from a power company in a typical home takes a very long time. Thus, if an electric vehicle charging apparatus is installed at a public facility such as a factory, store, or office, with the charging apparatus it is possible to convert alternating current voltage into direct current voltage in an AC-DC converter, with the direct current voltage supplied a storage battery of an electric vehicle for charging. At such times, in order to charge a storage battery of an electric vehicle in a short time by rapid charging, an electric vehicle charging apparatus requires power receiving facilities for receiving large amounts of power from a power company, and a high-capacity power conversion apparatus able to output a large current. In such cases, the electric vehicle charging apparatus becomes costly.

Thus, PTL 1, for example, proposes a configuration that provides a battery for supplying charging power separately from a motive power source battery of an electric vehicle, and charges the motive power source battery with electric power supplied from that battery. Specifically, in PTL 1, electric power from an alternating current power source is supplied to a battery for supplying charging power via a charging apparatus, and charges the battery for supplying charging power. In addition, electric power from the battery for supplying charging power is supplied to the motive power source battery via a rapid charging apparatus, and charges the motive power source battery.

Similarly, PTL 2 proposes a configuration in which the charging apparatus is equipped with a facilities storage battery, and which charges a storage battery of an electric vehicle with electric power supplied from this facilities storage battery. Specifically, in PTL 2, in a charging apparatus, after electric power from an alternating current power source is rectified by a rectifier, the electric power is supplied to a facilities storage battery via a charger, and charges the facilities storage battery. Also, when charging a storage battery of an electric vehicle, electric power in the facilities storage battery is supplied to the storage battery of the electric vehicle via the above charger, and charges the storage battery.

### Citation List

### Patent Literature

PTL 1: Japanese Unexamined Patent Application Publication No. 6-253461 (published September 9, 1994)
PTL 2: Japanese Unexamined Patent Application Publication No. 5-207668 (published August 31, 1993)

### Summary of Invention

### Technical Problem

As above, with the configurations of PTL 1 and 2, the charging of a storage battery of an electric vehicle is conducted with supplied electric power from a storage battery for supplying charging power provided in an electric vehicle charging apparatus, and thus facilities that receive power from high-capacity alternating current become unnecessary. However, since a storage battery of an electric vehicle is charged with electric power from only a storage battery for supplying charging power, there is a problem in that the power loss increases in the power conversion apparatus.

In other words, power loss occurs in a charger when supplying electric power to a storage battery via a charger. With both of the configurations in PTL 1 and 2, electric power from an alternating current power source is supplied to a storage battery for supplying charging power via a charger, such as an AC-DC converter or DC-DC converter, for example. In addition, electric power from the storage battery for supplying charging power is supplied to a storage battery of an electric vehicle via a charger, such as a DC-DC converter, for example. Consequently, the electric power supplied to a storage battery of an electric vehicle incurs power loss multiple times, and a configuration of the above related art that charges a storage battery of an electric vehicle with only such electric power has low power efficiency.

Consequently, the present invention takes as an object to provide an electric vehicle charging apparatus, an electric vehicle charging method, a program, and a recording medium able to improve power efficiency in the case of charging a storage battery of an electric vehicle in a configuration in which high-capacity power receiving facilities are unnecessary. Solution to Problem

In order to solve the above problem, an electric vehicle charging apparatus of the present invention is configured such that an electric vehicle charging apparatus that charges a motive power storage battery mounted onboard an electric vehicle is equipped with: an AC-DC conversion apparatus that converts alternating current power from an alternating current power source, and outputs direct current power; a storage battery for supplying charging power; a bidirectional DC-DC conversion apparatus provided between the output side of the AC-DC conversion apparatus and the storage battery for supplying charging power; and a control apparatus that controls the AC-DC conversion apparatus and the bidirectional DC-DC conversion apparatus such that, when not charging the motive power storage battery, the storage battery for supplying charging power is charged with electric power supplied from the alternating current power source input via the AC-DC conversion apparatus and the bidirectional DC-DC conversion apparatus, and when charging the motive power storage battery, the motive power storage battery is charged with electric power from the alternating current power source output via the AC-DC conversion apparatus as well as electric power discharged from the storage battery for supplying charging power and output via the bidirectional DC-DC conversion apparatus.

According to the above configuration, when not charging a motive power storage battery, a storage battery for supplying charging power is charged with electric power supplied from an alternating current power source input via an AC-DC conversion apparatus and a bidirectional DC-DC conversion apparatus. Meanwhile, when charging a motive power storage battery, the motive power storage battery is charged with electric power from an alternating current power source output via an AC-DC conversion apparatus, as well as electric power discharged from a storage battery for supplying charging power and output via a bidirectional DC-DC conversion apparatus.

Consequently, when not charging a motive power storage battery, a storage battery for supplying charging power may be pre-charged with electric power from an alternating current power source, and when charging a motive power storage battery, the motive power storage battery may be charged with electric power from an alternating current power source as well as electric power discharged from a storage battery for supplying charging power. Thus, rapid charging of a motive power storage battery becomes possible without providing high-capacity power facilities.

In addition, when charging a motive power storage battery, electric power supplied to the motive power storage battery by the discharging of a storage battery for supplying charging power incurs multiple power losses due to passing through a AC-DC conversion apparatus and a bidirectional DC-DC conversion apparatus. On the other hand, electric power from an alternating current power source only incurs power loss once due to passing through an AC-DC conversion apparatus. Consequently, with the configuration of the present invention that charges a motive power storage battery with electric power from an alternating current power source as well as electric power from the discharging of a storage battery for supplying charging power, power loss is low, and it is possible to improve the power efficiency in the case of charging a motive power storage battery.

### Advantageous Effects of Invention

According to a configuration of the present invention, when not charging a motive power storage battery, a storage battery for supplying charging power may be pre-charged with electric power from an alternating current power source, and when charging a motive power storage battery, the motive power storage battery may be charged with electric power from an alternating current power source as well as electric power discharged from a storage battery for supplying charging power. Thus, rapid charging of a motive power storage battery becomes possible without providing high-capacity power receiving facilities.

In addition, when charging a motive power storage battery, electric power supplied to the motive power storage battery by the discharging of a storage battery for supplying charging power incurs multiple power losses due to passing through a AC-DC conversion apparatus and a bidirectional DC-DC conversion apparatus. On the other hand, electric power from an alternating current power source only incurs power loss once due to passing through an AC-DC conversion apparatus. Consequently, with the configuration of the present invention that charges a motive power storage battery with electric power from an alternating current power source as well as electric power from the discharging of a storage battery for supplying charging power, power loss is low, and it is possible to improve the power efficiency in the case of charging a motive power storage battery.

### Brief Description of Drawings

[Fig. 1] Fig. 1 is a block diagram illustrating a configuration of an electric vehicle charging system equipped with an electric vehicle charging apparatus according to an embodiment of the present invention.
[Fig. 2] Fig. 2 is a circuit diagram illustrating an example in which the bidirectional DC-DC conversion apparatus illustrated in Fig. 1 is equipped with one bidirectional DC-DC conversion circuit.
[Fig. 3] Fig. 3 is a circuit diagram illustrating an example in which the bidirectional DC-DC conversion apparatus illustrated in Fig. 1 is equipped with two unidirectional DC-DC conversion circuits.
[Fig. 4] Fig. 4 is a block diagram illustrating a state in the case where the electric vehicle charging apparatus illustrated in Fig. 1 charges a storage battery for supplying charging power.
[Fig. 5] Fig. 5 is a block diagram illustrating a state in the case where the electric vehicle charging apparatus illustrated in Fig. 1 charges a motive power storage battery.
[Fig. 6] Fig. 6 is an explanatory diagram illustrating a state in which the electric vehicle charging apparatus illustrated in Fig. 1 is charging an electric vehicle.
[Fig. 7] Fig. 7 is a flowchart illustrating operation of the electric vehicle charging apparatus illustrated in Fig. 1. Description of Embodiments

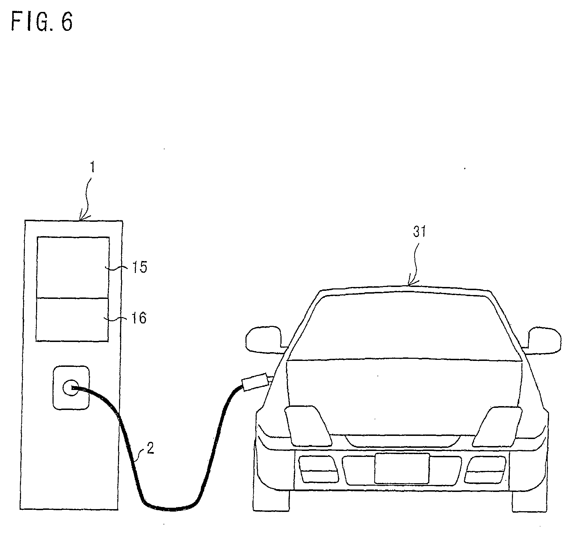

Exemplary embodiments of the present invention will be described below on the basis of the drawings. Fig. 6 is an explanatory diagram illustrating a state in which an electric vehicle charging apparatus 1 is charging an electric vehicle 31. When charging the electric vehicle 31, a feed cable 2 provided in the electric vehicle charging apparatus 1 is connected to the electric vehicle 31. The feed cable 2 includes functionality as an electric power cable that transmits electric power from the electric vehicle charging apparatus 1 to the electric vehicle 31, and functionality as a communication cable for communication between the electric vehicle charging apparatus 1 and the electric vehicle 31.

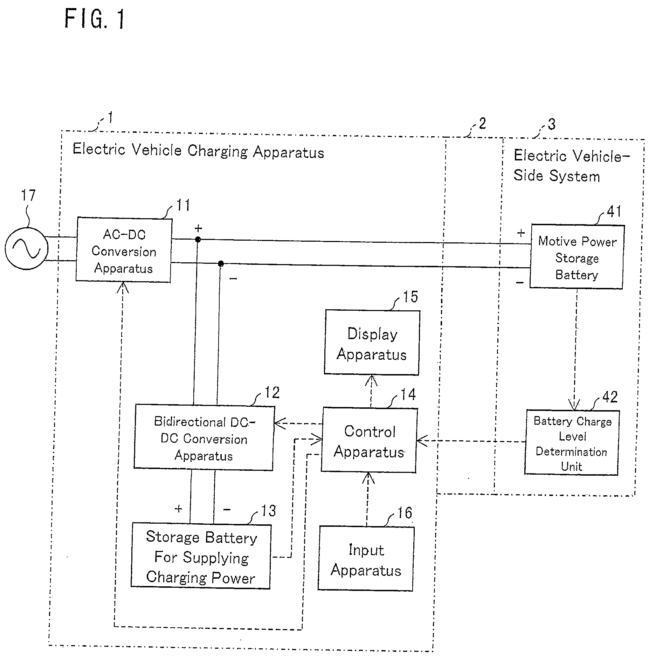

Fig. 1 is a block diagram illustrating a configuration of an electric vehicle charging system equipped with an electric vehicle charging apparatus 1 according to an exemplary embodiment of the present invention. As illustrated in Fig. 1, the electric vehicle charging system is equipped with an electric vehicle charging apparatus 1 and an electric vehicle-side system 3.

The electric vehicle charging apparatus 1 is equipped with an AC-DC conversion apparatus 11, a bidirectional DC-DC conversion apparatus 12, a storage battery 13 for supplying charging power, a control apparatus 14, a display apparatus 15, and an input apparatus 16. The electric vehicle-side system 3 is mounted onboard the electric vehicle 31, and is equipped with a motive power storage battery 41 and a battery charge level determination unit 42.

In the electric vehicle charging apparatus 1, alternating current voltage from a commercial alternating current power source 17 is supplied to the input side of the AC-DC conversion apparatus 11. This supply of alternating current voltage to the AC-DC conversion apparatus 11 is conducted by connecting a plug of the electric vehicle charging apparatus 1 to an outlet for the alternating current power source 17, for example.

The AC-DC conversion apparatus 11 converts the alternating current voltage from the alternating current power source 17, and outputs a direct current voltage suitable for charging the motive power storage battery 41. For example, in the case where the battery voltage of the motive power storage battery 41 is 300 V, the output voltage setting in the AC-DC conversion apparatus 11 becomes a voltage slightly higher than 300 V in order to charge the motive power storage battery 41.

Connected to the output side of the AC-DC conversion apparatus 11 are one of the input/output sides of the bidirectional DC-DC conversion apparatus 12, and the feed cable 2. The bidirectional DC-DC conversion apparatus 12 converts an output voltage from the AC-DC conversion apparatus 11, and supplies the storage battery 13 for supplying charging power with voltage suitable for charging the storage battery for supplying charging power 13. In addition, the bidirectional DC-DC conversion apparatus 12 converts an output voltage from the storage battery 13 for supplying charging power, and supplies the feed cable 2 with voltage suitable for charging the motive power storage battery 41.

For example, provided that the battery voltage of the storage battery 13 for supplying charging power is 350 V, the output voltage setting in the bidirectional DC-DC conversion apparatus 12 becomes a voltage slightly higher than 350 V in the case of charging the storage battery 13 for supplying charging power. On the other hand, the output voltage setting in the bidirectional DC-DC conversion apparatus 12 becomes a voltage slightly higher than 300 V in the case of charging the motive power storage battery 41 with discharge from the storage battery 13 for supplying charging power.

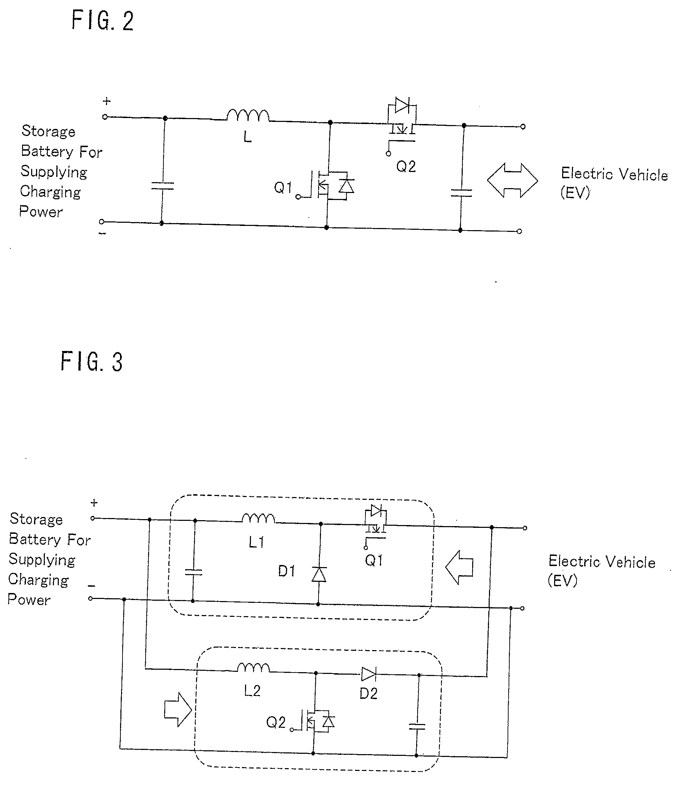

Figs. 2 and 3 illustrate specific examples of the bidirectional DC-DC conversion apparatus 12. Fig. 2 is a circuit diagram illustrating one example of a bidirectional DC-DC conversion circuit provided in the bidirectional DC-DC conversion apparatus 12. Fig. 3 is a circuit diagram illustrating another example of a bidirectional DC-DC conversion circuit provided in the bidirectional DC-DC conversion apparatus 12.

In other words, the bidirectional DC-DC conversion apparatus 12 may be a configuration equipped with one bidirectional DC-DC conversion circuit, as illustrated in Fig. 2. Also, the bidirectional DC-DC conversion apparatus 12 may be a configuration equipped with a bidirectional DC-DC conversion circuit made up of two unidirectional DC-DC conversion circuits, as illustrated in Fig. 3. In the circuit in Fig. 3, the two unidirectional DC-DC conversion circuits are connected in parallel, with the output directions going in opposite directions.

The storage battery 13 for supplying charging power is charged with electric power from the alternating current power source 17 input via the AC-DC conversion apparatus 11 and the bidirectional DC-DC conversion apparatus 12 when not charging the motive power storage battery 41. Also, electric power charged in the storage battery 13 for supplying charging power is discharged when charging the motive power storage battery 41, and supplied to the feed cable 2 via the bidirectional DC-DC conversion apparatus 12.

The control apparatus 14 controls the operation of the AC-DC conversion apparatus 11 and the bidirectional DC-DC conversion apparatus 12 in the electric vehicle charging apparatus 1. Specifically, when not charging the motive power storage battery 41, the control apparatus 14 controls the AC-DC conversion apparatus 11 and the bidirectional DC-DC conversion apparatus 12 to operate such that the storage battery 13 for supplying charging power is charged with electric power supplied from the alternating current power source 17.

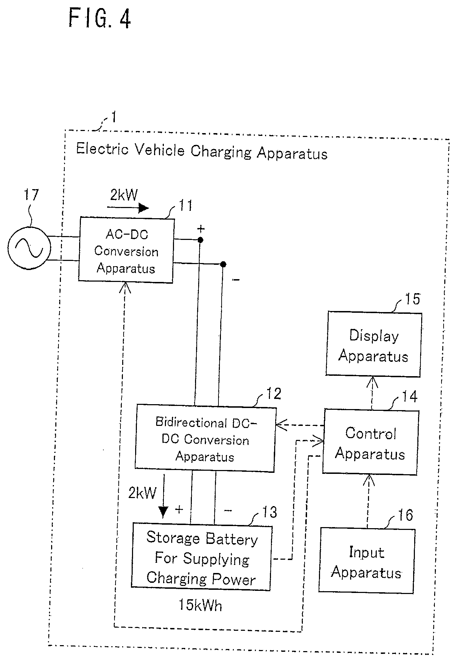

Fig. 4 is a block diagram illustrating a state in the case where the electric vehicle charging apparatus 1 illustrated in Fig. 1 charges the storage battery 13 for supplying charging power. As illustrated in Fig. 4, provided that the performance of the AC-DC conversion apparatus 11 is 2 kW, the storage battery 13 for supplying charging power is charged with 2 kW electric power if the power loss in the AC-DC conversion apparatus 11 and the bidirectional DC-DC conversion apparatus 12 is ignored. Provided that the total power capacity of the storage battery 13 for supplying charging power is 15 kWh, by simple calculation, it takes the storage battery 13 for supplying charging power 7.5 h to go from an empty state to a full charge.

In addition, the control apparatus 14 monitors the charge state of the storage battery 13 for supplying charging power, and controls charging to the storage battery 13 for supplying charging power and discharging from the storage battery 13 for supplying charging power to prevent overcharging and undercharging of the storage battery 13 for supplying charging power. For example, if the remaining electric energy in the storage battery 13 for supplying charging power is 100% with respect to a full charge (an upper limit value), the control apparatus 14 stops the AC-DC conversion apparatus 11 and the bidirectional DC-DC conversion apparatus 12 in order to prevent overcharging of the storage battery 13 for supplying charging power. As another example, if the remaining electric energy in the storage battery 13 for supplying charging power is 20% or less with respect to a full charge (a lower limit value), the control apparatus 14 stops the bidirectional DC-DC conversion apparatus 12 in order to prevent over-discharging of the storage battery 13 for supplying charging power.

Note that the measurement of the remaining electric energy in the storage battery 13 for supplying charging power may be computed by measuring the voltage of the storage battery 13 for supplying charging power, for example, or alternatively, may be computed from the difference between the integrated values of the current flowing into and out of the storage battery 13 for supplying charging power.

Meanwhile, when charging the motive power storage battery 41, the control apparatus 14 controls the AC-DC conversion apparatus 11 and the bidirectional DC-DC conversion apparatus 12 to operate such that the motive power storage battery 41 is charged by electric power supplied form the alternating current power source 17 and electric power discharged from the storage battery 13 for supplying charging power.

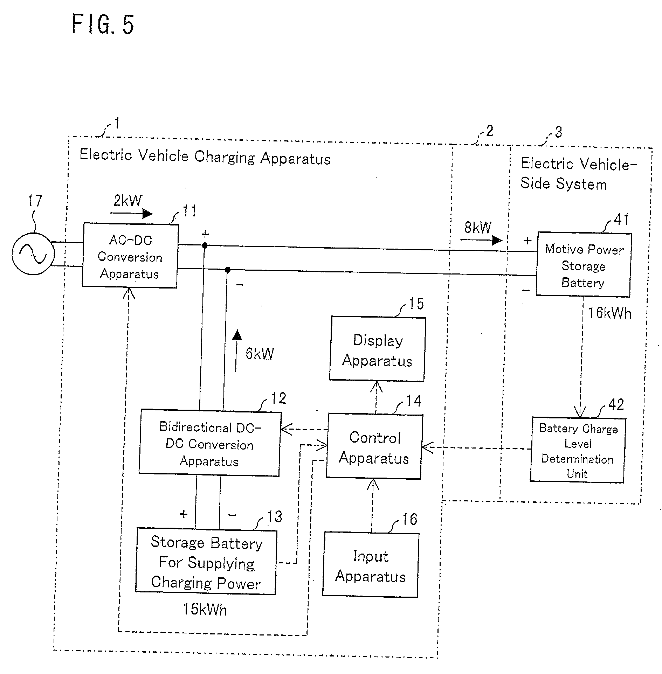

Fig. 5 is a block diagram illustrating a state in the case where the electric vehicle charging apparatus 1 illustrated in Fig. 1 charges the motive power storage battery 41. As illustrated in Fig. 5, provided that the performance of the AC-DC conversion apparatus 11 is 2 kW, and that the performance of the bidirectional DC-DC conversion apparatus 12 is 6 kW, the motive power storage battery 41 is charged with 8 kW electric power if the power loss in the AC-DC conversion apparatus 11 and the bidirectional DC-DC conversion apparatus 12 is ignored. Provided that the total power capacity of the motive power storage battery 41 is 16 kWh, by simple calculation, it takes the motive power storage battery 41 2 h to go from an empty state to a full charge.

Also, the control apparatus 14 monitors the charging state of the motive power storage battery 41 with information from the battery charge level determination unit 42, and controls charging to the motive power storage battery 41 to prevent overcharging of the motive power storage battery 41. Specifically, if the remaining electric energy in the motive power storage battery 41 is 100% with respect to a full charge (an upper limit value), the control apparatus 14 stops the AC-DC conversion apparatus 11 and the storage battery 13 for supplying charging power in order to prevent overcharging of the motive power storage battery 41.

Note that the measurement of the remaining electric energy in the motive power storage battery 41 by the battery charge level determination unit 42 may be computed by measuring the voltage of the motive power storage battery 41, for example, similarly to the case of the storage battery 13 for supplying charging power, or alternatively, may be computed from the difference between the integrated values of the current flowing into and out of the motive power storage battery 41.

The display apparatus 15 is controlled by the control apparatus 14 and displays various information. The input apparatus 16 applies various settings with respect to the control apparatus 14 according to user operations.

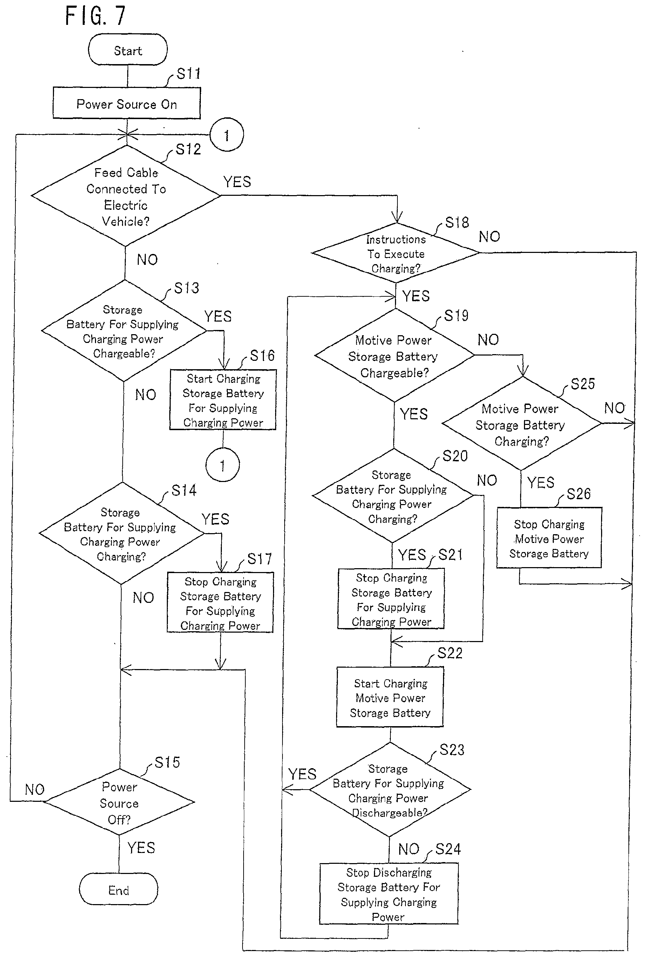

Operation of the electric vehicle charging apparatus 1 of the present embodiment with the above configuration will be described below. Fig. 7 is a flowchart illustrating operation of the electric vehicle charging apparatus 1.

When charging the electric vehicle 31, the feed cable 2 is connected to the electric vehicle 31 by the user. Doing so enables power supply from the electric vehicle charging apparatus 1 to the motive power storage battery 41 of the electric vehicle 31, as well as communication between the electric vehicle charging apparatus 1 and the electric vehicle-side system 3.

As illustrated in Fig. 7, when the electric vehicle charging apparatus 1 is powered on (S11), the control apparatus 14 determines whether or not the feed cable 2 is connected to the electric vehicle 31 (S12).

In the determination in S12, if the feed cable 2 is connected to the electric vehicle 31, communication with the electric vehicle-side system 3 becomes possible as above. Consequently, the control apparatus 14 determines that the feed cable 2 is connected to the electric vehicle 31 if communication with the electric vehicle-side system 3 is possible. On the other hand, the control apparatus 14 determines that the feed cable 2 is not connected to the electric vehicle 31 if communication with the electric vehicle-side system 3 is not possible.

As a result of the determination in S12, if the feed cable 2 is not connected to the electric vehicle 31, the control apparatus 14 determines whether or not charging the storage battery 13 for supplying charging power is possible (S13).

In order to make the determination in S13, the control apparatus 14 measures the remaining electric energy in the storage battery 13 for supplying charging power. The control apparatus 14 then determines that charging is not possible if the remaining electric energy in the storage battery 13 for supplying charging power is 100% with respect to a full charge (an upper limit value), for example. On the other hand, the control apparatus 14 determines that charging is possible if the remaining electric energy in the storage battery 13 for supplying charging power is less than 100% with respect to a full charge (an upper limit value).

As a result of the determination in S13, if charging of the storage battery 13 for supplying charging power is not possible, the control apparatus 14 additionally determines whether or not the storage battery 13 for supplying charging power is charging (S14). As a result of this determination, if the storage battery 13 for supplying charging power is charging, the control apparatus 14 determines whether or not the power source is switched off (S15), and if the power source is off, ends the process. On the other hand, if the power source is not off in S15, the control apparatus 14 returns to S12 and repeats the processing in S12 and thereafter.

Also, as a result of the determination in S14, if the storage battery 13 for supplying charging power is charging, the control apparatus 14 ends charging of the storage battery 13 for supplying charging power (S17), and proceeds to S15. In S15, the control apparatus 14 determines whether or not the power source is switched off, and if the power source is off, ends the process. On the other hand, if the power source is not off, the control apparatus 14 returns to S12 and repeats the processing in S12 and thereafter.

Meanwhile, as a result of the determination in S13, if charging the storage battery 13 for supplying charging power is possible, the control apparatus 14 starts charging the storage battery 13 for supplying charging power (S16), and returns to the processing in S12.

Fig. 4 illustrates the operational state of the electric vehicle charging apparatus 1 during the processing of S16. In the processing of S16, the AC-DC conversion apparatus 11 and the bidirectional DC-DC conversion apparatus 12 operate under control by the control apparatus 14. In this case, the AC-DC conversion apparatus 11 converts the alternating current voltage from the alternating current power source 17, and outputs a direct current voltage suitable for charging the motive power storage battery 41. Also, the bidirectional DC-DC conversion apparatus 12 converts an output voltage from the AC-DC conversion apparatus 11 (direct current voltage), and supplies the storage battery 13 for supplying charging power with a direct current voltage suitable for charging the storage battery 13 for supplying charging power. Thus, electric power supplied from the alternating current power source 17 is used to charge the storage battery 13 for supplying charging power.

Also, as a result of the determination in S12, if the feed cable 2 is connected to the electric vehicle 31, the control apparatus 14 determines whether or not the user has issued instructions from the input apparatus 16 to execute charging of the motive power storage battery 41 (S18). In this determination, if the user has not issued instructions from the input apparatus 16 to execute charging of the motive power storage battery 41, the control apparatus 14 proceeds to S15.

Meanwhile, in the determination in S18, if the user has issued instructions from the input apparatus 16 to execute charging of the motive power storage battery 41, the control apparatus 14 additionally determines whether or not charging of the motive power storage battery 41 is possible (S19).

In order to make the determination in S19, the control apparatus 14 acquires information indicating the remaining electric energy in the motive power storage battery 41 from the battery charge level determination unit 42 of the electric vehicle-side system 3. Then, on the basis of the acquired information, the control apparatus 14 determines that charging is not possible if the remaining electric energy in the motive power storage battery 41 is 100% with respect to a full charge (an upper limit value), for example. On the other hand, the control apparatus 14 determines that charging is possible if the remaining electric energy in the motive power storage battery 41 is less than 100% with respect to a full charge (an upper limit value).

As a result of the determination in S19, if charging of the motive power storage battery 41 is not possible, the control apparatus 14 additionally determines whether or not the motive power storage battery 41 is charging (S25). As a result of the determination in S25, if the motive power storage battery 41 is not charging, the control apparatus 14 proceeds to the processing in S15. On the other hand, as a result of the determination in S25, if the motive power storage battery 41 is charging, the control apparatus 14 ends charging of the motive power storage battery 41 (S26), and after that, proceeds to the processing in S15. Note that in the case of ending charging of the motive power storage battery 41, the control apparatus 14 stops operation of the AC-DC conversion apparatus 11 and the bidirectional DC-DC conversion apparatus 12.

Also, as a result of the determination in S19, if charging of the motive power storage battery 41 is possible, the control apparatus 14 determines whether or not the storage battery 13 for supplying charging power is charging (S20).

As a result of the determination in S20, if the storage battery 13 for supplying charging power is not charging, the control apparatus 14 proceeds to the processing in S22. On the other hand, as a result of the determination in S20, if the storage battery 13 for supplying charging power is charging, the control apparatus 14 ends charging of the storage battery 13 for supplying charging power (S21), proceeds to S22, and starts charging the motive power storage battery 41 (S22).

Fig. 5 illustrates the operational state of the electric vehicle charging apparatus 1 during the processing of S22. In the processing of S22, the AC-DC conversion apparatus 11 and the bidirectional DC-DC conversion apparatus 12 operate under control by the control apparatus 14. In this case, the AC-DC conversion apparatus 11 converts the alternating current voltage from the alternating current power source 17, and outputs a direct current voltage suitable for charging the motive power storage battery 41. Also, discharge from the storage battery 13 for supplying charging power is conducted, and the bidirectional DC-DC conversion apparatus 12 converts the output voltage from the storage battery 13 for supplying charging power (direct current voltage), and outputs a direct current voltage suitable for charging the motive power storage battery 41. Consequently, the electric power supplied from the feed cable 2 to the motive power storage battery 41 of the electric vehicle 31 becomes the sum of the electric power from the alternating current power source 17 converted into direct current voltage by the AC-DC conversion apparatus 11, and the electric power discharged from the storage battery 13 for supplying charging power and output from the bidirectional DC-DC conversion apparatus 12.

After starting the charging of the motive power storage battery 41 in S22, the control apparatus 14 monitors the state of the storage battery 13 for supplying charging power, and determines whether or not discharging of the storage battery 13 for supplying charging power is possible, on the basis of the remaining electric energy in the storage battery 13 for supplying charging power (S23).

In the determination in S23, the control apparatus 14 determines that discharging is not possible if the remaining electric energy in the storage battery 13 for supplying charging power is 20% or less with respect to a full charge (a lower limit value), for example. On the other hand, the control apparatus 14 determines that discharging is possible if the remaining electric energy in the storage battery 13 for supplying charging power exceeds 20% with respect to a full charge (a lower limit value).

As a result of the determination in S23, if discharging of the storage battery 13 for supplying charging power is determined to be possible, the control apparatus 14 returns to the processing in S19 and repeats the processing in S19 and thereafter. On the other hand, as a result of the determination in S23, if discharging of the storage battery 13 for supplying charging power is determined to be not possible, the control apparatus 14 ends discharging of the storage battery 13 for supplying charging power (S24), returns to the processing in S19, and repeats the processing in S19 and thereafter.

Note that in the case of ending discharging of the storage battery 13 for supplying charging power, the control apparatus 14 stops operation of the bidirectional DC-DC conversion apparatus 12. In this case, charging with respect to the motive power storage battery 41 is conducted with only the output from the AC-DC conversion apparatus 11.

As above, in the electric vehicle charging apparatus 1 of the present embodiment, when not charging the motive power storage battery 41 it is possible to pre-charge the storage battery 13 for supplying charging power with electric power from the alternating current power source 17. Then, for the motive power storage battery 41, it is possible to charge the motive power storage battery 41 with electric power from the alternating current power source 17 as well as electric power discharged from the storage battery 13 for supplying charging power. Thus, rapid charging of the motive power storage battery 41 becomes possible without providing high-capacity power facilities.

In addition, when charging the motive power storage battery 41, electric power supplied to the motive power storage battery 41 by the discharging of the storage battery 13 for supplying charging power incurs multiple power losses due to passing through the AC-DC conversion apparatus 11 and the bidirectional DC-DC conversion apparatus 12. On the other hand, the electric power from the alternating current power source 17 only incurs power loss once due to passing through the AC-DC conversion apparatus 11. Consequently, with the configuration of the electric vehicle charging apparatus 1 that charges the motive power storage battery 41 with electric power from the alternating current power source 17 as well as electric power from the discharging of the storage battery 13 for supplying charging power, power loss is low, and it is possible to improve the power efficiency in the case of charging the motive power storage battery 41.

In addition, the bidirectional DC-DC conversion apparatus 12 is a configuration equipped with a single bidirectional DC-DC conversion circuit, or a configuration equipped with two unidirectional DC-DC conversion circuits connected in parallel with output directions going in opposite directions. Thus, an apparatus equipped with general-purpose circuits may be used.

Also, since charging with respect to the storage battery 13 for supplying charging power is stopped in the case where the remaining electric energy in the storage battery 13 for supplying charging power is at or above an upper limit value, it is possible to prevent overcharging of the storage battery 13 for supplying charging power. This configuration is likewise similar for the motive power storage battery 41.

Also, since discharging from the storage battery 13 for supplying charging power is stopped in the case where the remaining electric energy in the storage battery 13 for supplying charging power is at or below a lower limit value, it is possible to prevent a situation leading to a failure in functionality as a storage battery due to over-discharging of the storage battery 13 for supplying charging power.

Lastly, each block in the electric vehicle charging apparatus 1, and particularly the control apparatus 14, may be configured with hardware logic, but may also be realized in software using a CPU as follows.

In other words, the electric vehicle charging apparatus 1 is equipped with a central processing unit (CPU) that executes the commands of a control program that realizes respective functions, read-only memory (ROM) that stores the above program, random access memory (RAM) into which the above program is loaded, a storage apparatus (recording medium) such as memory that stores the above program and various data, and the like. The object of the present invention is then achievable by supplying the electric vehicle charging apparatus 1 with a recording medium upon which is recorded, in computer-readable form, program code (a program in executable format, an intermediate code program, or source program) of the control program of the electric vehicle charging apparatus 1 that is software realizing the functions discussed above, and by having that computer (or CPU or MPU) read out and execute program code recorded on the recording medium.

The medium that may be used as the above recording medium may be: tape-based media such as magnetic tape and cassette tapes; disk-based media, including magnetic disks such as floppy (registered trademark) disks/hard disks, and optical discs such as CD-ROM/MO/MD/DVD/CD-R discs; card-based media such as IC cards (including memory cards)/optical cards; and semiconductor memory-based media such as mask ROM/EPROM/EEPROM/flash ROM, for example.

In addition, the electric vehicle charging apparatus 1 may be configured to be connectable to a communication network, such that the above program code is supplied via a communication network. The network usable as such a communication network is not particularly limited, and may be an internet, an intranet, an extranet, LAN, ISDN, VAN, a CATV communication network, a virtual private network, a telephone network, a mobile communication network, or a satellite communication network, for example. Also, the medium usable as the transmission medium constituting a communication network is not particularly limited, and may be: a wired medium such as IEEE 1394, USB, a power line carrier, a cable TV line, a telephone line, or an ADSL line; or a wireless medium such as infrared like IrDA or a remote control, Bluetooth (registered trademark), 802.11 wireless, HDR, a mobile phone network, a satellite link, or a digital terrestrial network, for example. Note that the present invention may also be realized in the form of a computer data signal in which the above program code is embodied by electronic transmission, and which is embedded in a carrier wave.

As above, an electric vehicle charging apparatus of the present invention is configured such that an electric vehicle charging apparatus that charges a motive power storage battery mounted onboard an electric vehicle is equipped with: an AC-DC conversion apparatus that converts alternating current power from an alternating current power source, and outputs direct current power; a storage battery for supplying charging power; a bidirectional DC-DC conversion apparatus provided between the output side of the AC-DC conversion apparatus and the storage battery for supplying charging power; and a control apparatus that controls the AC-DC conversion apparatus and the bidirectional DC-DC conversion apparatus such that, when not charging the motive power storage battery, the storage battery for supplying charging power is charged with electric power supplied from the alternating current power source input via the AC-DC conversion apparatus and the bidirectional DC-DC conversion apparatus, and when charging the motive power storage battery, the motive power storage battery is charged with electric power from the alternating current power source output via the AC-DC conversion apparatus as well as electric power discharged from the storage battery for supplying charging power and output via the bidirectional DC-DC conversion apparatus.

In addition, an electric vehicle charging method of the present invention is configured such that an electric vehicle charging method that charges a motive power storage battery mounted onboard an electric vehicle uses an AC-DC conversion apparatus that converts alternating current power from an alternating current power source, and outputs direct current power, a storage battery for supplying charging power, and a bidirectional DC-DC conversion apparatus provided between the output side of the AC-DC conversion apparatus and the storage battery for supplying charging power, and is characterized by, when not charging the motive power storage battery, charging the storage battery for supplying charging power with electric power supplied from the alternating current power source input via the AC-DC conversion apparatus and the bidirectional DC-DC conversion apparatus, and when charging the motive power storage battery, charging the motive power storage battery with electric power from the alternating current power source output via the AC-DC conversion apparatus as well as electric power discharged from the storage battery for supplying charging power and output via the bidirectional DC-DC conversion apparatus.

According to the above configuration, when not charging a motive power storage battery, a storage battery for supplying charging power is charged with electric power supplied from an alternating current power source input via an AC-DC conversion apparatus and a bidirectional DC-DC conversion apparatus. Meanwhile, when charging a motive power storage battery, the motive power storage battery is charged with electric power from an alternating current power source output via an AC-DC conversion apparatus, as well as electric power discharged from a storage battery for supplying charging power and output via a bidirectional DC-DC conversion apparatus.

Consequently, when not charging a motive power storage battery, a storage battery for supplying charging power may be pre-charged with electric power from an alternating current power source, and when charging a motive power storage battery, the motive power storage battery may be charged with electric power from an alternating current power source as well as electric power discharged from a storage battery for supplying charging power. Thus, rapid charging of a motive power storage battery becomes possible without providing high-capacity power facilities.

In addition, when charging a motive power storage battery, electric power supplied to the motive power storage battery by the discharging of a storage battery for supplying charging power incurs multiple power losses due to passing through a AC-DC conversion apparatus and a bidirectional DC-DC conversion apparatus. On the other hand, electric power from an alternating current power source only incurs power loss once due to passing through an AC-DC conversion apparatus. Consequently, with the configuration of the present invention that charges a motive power storage battery with electric power from an alternating current power source as well as electric power from the discharging of a storage battery for supplying charging power, power loss is low, and it is possible to improve the power efficiency in the case of charging a motive power storage battery.

The above electric vehicle charging apparatus may also be configured such that the bidirectional DC-DC conversion apparatus is equipped with a single bidirectional DC-DC conversion circuit.

According to the above configuration, an apparatus equipped with general-purpose circuits may be used as the bidirectional DC-DC conversion apparatus.

The above electric vehicle charging apparatus may also be configured such that the bidirectional DC-DC conversion apparatus is equipped with two unidirectional DC-DC conversion circuits connected in parallel and with output directions going in opposite directions.

According to the above configuration, an apparatus equipped with general-purpose circuits may be used as the bidirectional DC-DC conversion apparatus.

The above electric vehicle charging apparatus may also be configured such that the control apparatus measures the remaining electric energy in the storage battery for supplying charging power, and in the case where the remaining electric energy is equal to or greater than an upper limit value, controls the AC-DC conversion apparatus and the bidirectional DC-DC conversion apparatus to stop charging with respect to the storage battery for supplying charging power.

According to the above configuration, since charging with respect to the storage battery for supplying charging power is stopped in the case where the remaining electric energy in the storage battery for supplying charging power is at or above an upper limit value, it is possible to prevent overcharging of the storage battery for supplying charging power.

The above electric vehicle charging apparatus may also be configured such that the control apparatus measures the remaining electric energy in the storage battery for supplying charging power, and in the case where the remaining electric energy is less than or equal to a lower limit value, controls the bidirectional DC-DC conversion apparatus to stop discharging from the storage battery for supplying charging power.

According to the above configuration, since discharging from a storage battery for supplying charging power is stopped in the case where the remaining electric energy in the storage battery for supplying charging power is at or below a lower limit value, it is possible to prevent a situation leading to a failure in functionality as a storage battery due to over-discharging of the storage battery for supplying charging power.

The present invention is not limited to the embodiments discussed above, and various modifications are possible within the scope indicated by the claims. Embodiments obtained by appropriately combining the technical means respectively disclosed in different embodiments are also included within the technical scope of the present invention.

### Reference Signs List

- 1: Electric vehicle charging apparatus
- 2: Feed cable
- 3: Electric vehicle-side system
- 11: AC-DC conversion apparatus
- 12: Bidirectional DC-DC conversion apparatus
- 13: Storage battery for supplying charging power
- 14: Control apparatus
- 15: Display apparatus
- 16: Input apparatus
- 17: Alternating current power source
- 31: Electric vehicle
- 41: Motive power storage battery
- 42: Battery charge level determination unit

## Claims

1. An electric vehicle charging apparatus that charges a motive power storage battery mounted onboard an electric vehicle, **characterized by** comprising:
an AC-DC conversion apparatus that converts alternating current power from an alternating current power source, and outputs direct current power;
a storage battery for supplying charging power;
a bidirectional DC-DC conversion apparatus provided between the output side of the AC-DC conversion apparatus and the storage battery for supplying charging power; and
a control apparatus that controls the AC-DC conversion apparatus and the bidirectional DC-DC conversion apparatus such that, when not charging the motive power storage battery, the storage battery for supplying charging power is charged with electric power supplied from the alternating current power source input via the AC-DC conversion apparatus and the bidirectional DC-DC conversion apparatus, and when charging the motive power storage battery, the motive power storage battery is charged with electric power from the alternating current power source output via the AC-DC conversion apparatus as well as electric power discharged from the storage battery for supplying charging power and output via the bidirectional DC-DC conversion apparatus.

2. The electric vehicle charging apparatus according to claim 1, **characterized in that**
the bidirectional DC-DC conversion apparatus is equipped with a single bidirectional DC-DC conversion circuit.

3. The electric vehicle charging apparatus according to claim 1, **characterized in that**
the bidirectional DC-DC conversion apparatus is equipped with two unidirectional DC-DC conversion circuits connected in parallel and with output directions going in opposite directions.

4. The electric vehicle charging apparatus according to any one of claims 1 to 3, **characterized in that**
the control apparatus measures the remaining electric energy in the storage battery for supplying charging power, and in the case where the remaining electric energy is equal to or greater than an upper limit value, controls the AC-DC conversion apparatus and the bidirectional DC-DC conversion apparatus to stop charging with respect to the storage battery for supplying charging power.

5. The electric vehicle charging apparatus according to any one of claims 1 to 3, **characterized in that**
the control apparatus measures the remaining electric energy in the storage battery for supplying charging power, and in the case where the remaining electric energy is less than or equal to a lower limit value, controls the bidirectional DC-DC conversion apparatus to stop discharging from the storage battery for supplying charging power.

6. An electric vehicle charging method that charges a motive power storage battery mounted onboard an electric vehicle, the electric vehicle charging method using
an AC-DC conversion apparatus that converts alternating current power from an alternating current power source, and outputs direct current power, a storage battery for supplying charging power, and a bidirectional DC-DC conversion apparatus provided between the output side of the AC-DC conversion apparatus and the storage battery for supplying charging power, and **characterized by**
when not charging the motive power storage battery, charging the storage battery for supplying charging power with electric power supplied from the alternating current power source input via the AC-DC conversion apparatus and the bidirectional DC-DC conversion apparatus, and when charging the motive power storage battery, charging the motive power storage battery with electric power from the alternating current power source output via the AC-DC conversion apparatus as well as electric power discharged from the storage battery for supplying charging power and output via the bidirectional DC-DC conversion apparatus.

7. A program causing a computer to function as the control apparatus according to any one of claims 1 to 5.

8. A computer-readable recording medium upon which is recorded the program according to claim 7.
